# EUROPÄISCHE PATENTSCHRIFT

(11) **EP 1 360 105 B1**
(45) Veröffentlichungstag und Bekanntmachung des Hinweises auf die Patenterteilung: **26.01.2011**
(21) Anmeldenummer: 02704720.8
(22) Anmeldetag: 15.02.2002
(51) Int. Cl.: B62D 25/16

(54) **LEICHTGEWICHTIGES RADLAUFTEIL**
LIGHT-WEIGHT WHEEL HOUSING ELEMENT
ELEMENT DE PASSAGE DE ROUE DE FAIBLE POIDS

(30) Priorität: 16.02.2001 DE 10107430
(43) Veröffentlichungstag der Anmeldung: 12.11.2003
(73) Patentinhaber: International Automotive Components Group GmbH, 47804 Krefeld (DE)
(72) Erfinder: BEHRENDT, Uwe, 29336 Nienhagen (DE); TRAPP, Dirk, 29227 Celle (DE)
(74) Vertreter: Liesegang, Eva
(86) Internationale Anmeldenummer: PCT/EP2002/001657
(87) Internationale Veröffentlichungsnummer: WO 2002/066312

(56) Entgegenhaltungen:
- EP-A- 0 952 068
- DE-A- 3 343 402
- GB-A- 1 570 466

## Beschreibung

Die Erfindung betrifft ein leichtgewichtiges Radlaufteil aus Kunststoff zum Mindern der Übertragung von Roll-, Spritzwasser- und Steinschlaggeräuschen in den Fahrzeuginnenraum sowie. zum Schutz vor Korrosion. Weiterhin betrifft die Erfindung die Verwendung von geschäumtem oder expandiertem thermoplastischen Kunststoff, duroplastischen Kunststoff, Elastomer oder Mischungen davon zur Herstellung von leichtgewichtigen Radlaufteilen.

Bei Fahrzeugen werden die Radkästen in der Regel mit einer Auskleidung versehen, die als Radlaufteil, Radlaufschale, Radhausschale oder Radkastenauskleidung bezeichnet wird. Das Radlaufteil dient zum einen der Verminderung der Übertragung der während einer Fahrt eines Fahrzeuges durch das sich auf einem Untergrund drehenden Rades erzeugten Laufgeräusche in das Fahrzeuginnere. Zum anderen dient das Radlaufteil als Spritzschutz gegenüber während der Fahrt durch das sich drehende Rad hoch geschleuderten Partikeln, wie beispielsweise Sand oder Kies, sowie gegenüber Wasser oder Schlamm. Das Radlaufteil bewirkt mithin in seiner Funktion als Spritzschutz beispielsweise einen Schutz der Karosserie oder des Motorraums vor Lackschäden bzw. Korrosion und vor Verschmutzung durch hochgeschleuderte Partikel und/oder Wasser oder Schlamm. Weiterhin dient das Radlaufteil auch zur Abdeckung von Öffnungen, wie z.B. von Zwangsentlüftungen, die im hinteren seitlichen Fahrzeugbereich in die Stoßfänger münden.

Radlaufteile, die als reine Abdeckung und als Korrosionsschutz verwendet werden, sind überwiegend aus ungefülltem Polypropylen und Polyethylen im Spritzgieß- oder Vakuumformverfahren hergestellt. Diese Radlaufteile bewirken jedoch nur eine geringe Minderung der Übertragung von Störgeräuschen in den Fahrzeuginnenraum.

Aus der gattungsbildenden DE 33 43 402 ist ein Radlaufteil bekannt, welches neben guten mechanischen Eigenschaften über verbesserte Schalldämmungs- und Schalldämpfungseigenschaften verfügt. Gemäß der Lehre der DE 33 43 402 wird das Radlaufteil aus einem Kunststoff gefertigt, der 25 bis 40 Gew.-% Polyolefin und/oder Polystyrol mit hoher Schlagfestigkeit, 25 bis 40 Gew.-% Synthesekautschuk, 25 bis 40 Gew.-% eines amorphen Füllstoffs sowie gegebenenfalls Additive umfaßt.

Nachteilig ist, daß die Dichte eines solchen Kunststoffs ca. 1150 kg/m³ beträgt. Bei Wandstärken von etwa 2 bis 2,3 mm weisen unter Verwendung der aus der DE 33 43 402 bekannten Zusammensetzung hergestellte Radlaufteile ein hohes Bauteilgewicht auf. Im Hinblick auf die ständig zunehmenden Bestrebungen der Automobilindustrie, die Bauteil- und Fahrzeuggewichte, insbesondere im Hinblick auf die allgemein geforderte Absenkung des durchschnittlichen Kraftstoffverbrauchs der Fahrzeuge, zu verringern, werden die hohen Gewichte dieser Radlaufteile immer weniger akzeptiert.

Aus der EP 0 222 193 sowie der DE 295 17 046 sind Radlaufteile mit verringertem Gewicht bekannt. Diese Radlaufteile basieren auf einem Kunststoffaservlies, wobei die Radlaufteile durch Warmverformung aus Bahnenmaterial hergestellt werden. Diese Radlaufteile weisen neben einem verringerten Gewicht auch hinreichende akustische Eigenschaften auf.

Nachteilig ist jedoch, daß die aus der EP 0 222 193 und der DE 295 17 046 bekannten Radlaufteile große Mengen an Feuchtigkeit bzw. Wasser aufnehmen. Die Wasseraufnahme dieser Radlaufteile kann bis zu 200 Ges.-% des Eigengewichts des trockenen Radlaufteils betragen. Die aufgenommene Feuchtigkeit bzw. das aufgenommene Wasser wird weiterhin äußerst nachteilig von dem Radlaufteil beispielsweise in der Garage unter Bildung großer Wasserlachen wieder abgegeben.

Weiterhin - nimmt dieses Radlaufteil äußerst nachteilig große Mengen von Schmutzpartikeln, insbesondere von faserigem Material aber auch von Schlamm und Staub auf. Die aufgenommenen Schmutzpartikel verdoppeln in etwa das Gewicht dieses Radlaufteils nach etwa 80.000 gefahrenen Kilometern. Weitere Nachteile ergeben sich aus dem Herstellungsverfahren. Bei der Warmverformung von Bahnenmaterial in die relativ komplizierte Kontur eines Radlaufteils ergeben sich durch die Randbeschnitte große Materialverluste.

In der Regel weist das Fasermaterial neben der Vernadelung eine weitere Verfestigung auf, die durch Tränkung des Fasermaterials mit einem Latex-Binder (SBR, Styrol-Butadien-Rubber) oder mit einem Binder auf Acrylharzbasis erreicht wird. Dies hat jedoch zur Folge, daß das Fasermaterial und damit der Randbeschnitt zur Zeit nicht sinnvoll recycliert werden können. Dies führt neben ökologischen Problemen im Hinblick auf eine Entsorgung dieser Reste auch zu ökonomischen Nachteilen.

Gemäß einer weiter vorgeschlagenen Ausführungsform wird das Kunststoffaservlies in eine flächiges warmverformbares Trägermaterial eingebettet. Hierbei kann auf den Latex-Binder verzichtet werden, was grundsätzlich ein Recycling des Verbundmaterials ermöglicht, jedoch zu einem Downgrading des Faservliesmaterials führt. Schwierigkeiten treten jedoch bei komplexen, dreidimensionalen Geometrien mit rechtwinkeligen Ausformungen und/oder kleinen Radien auf. Diese Schwierigkeiten führen zu konstruktiven Einschränkungen.

Aus der DE 198 17 567.1 ist ein Radlaufteil bekannt, das aus einem tragenden Rahmen aus thermoplastischem Kunststoff und aus Einlagerungen eines textilen Kunststoffmaterials besteht. Gemäß einer bevorzugten Ausführungsform ist der für den tragenden Rahmen und das textile Kunststoffmaterial verwendete Kunststoff identisch, wobei der Kunststoff 25 bis 40 Gew.-% eines mineralischen Füllstoffs enthalten kann.

Der thermoplastische Kunststoffrahmen kann im Spritzgießverfahren hergestellt werden, wobei vorgestanzte Vliesstoffeinlagen direkt umspritzt oder aber auch nach dem Spritzgießen des Rahmens durch Kleben oder Ultraschallschweißen mit diesem verbunden werden können. In jedem Fall können dabei die Vliesstoffzuschnitte so durchgeführt werden, daß nur geringe Mengen an Vliesverschnitt anfallen. Da die Bauteilsteifigkeit größtenteils durch den Rahmen aus thermoplastischem Kunststoff erreicht wird, kann das eingesetzte Vliesmaterial weniger steif ausgestaltet sein, was zu einem geringeren Vliesmaterial- bzw. Binder- oder Trägereinsatz führt. Unter Berücksichtigung eines späteren Recyclings sollten der Rahmen und das Faservlies aus gleichen Basiskunststoffen zusammengesetzt sein.

Die für Faservliesmaterialien typischen Probleme einer hohen Wasseraufnahme und der Aufnahme von Schmutzpartikeln sind bei dem aus der DE 198 17 567 bekannten Radlaufteil auch von Bedeutung. Aufgrund der kleineren mit Faservlies bedeckten Flächenbereiche sind diese Probleme jedoch geringer. Das Bauteilgewicht ist direkt abhängig vom Verhältnis der Flächenanteile des Kunststoffrahmens und des Faservlieses und liegt zwischen den Gewichten der Radlaufteile aus reinem Kunststofffaservlies und reinem Kunststoff.

Nachteilig ist weiterhin, daß die Verwendung eines Kunststoffrahmens sowie von Faservliesen zur Herstellung des aus der DE 198 17 567 bekannten Radlaufteils das Herstellungsverfahren einen erhöhten apparativen Aufwand erfordert.

Es besteht folglich ein Bedarf an einer weiteren Verringerung der Bauteilgewichte der bekannten Radlaufteile sowie an einer Verbesserung im Hinblick auf die Aufnahme von Schmutzpartikeln und Wasser durch die Radlaufteile.

Aufgabe der Erfindung ist es mithin, ein Radlaufteil bereitzustellen, das ein geringes Gewicht aufweist, wenig Wasser und Schmutzpartikeln aufnimmt, ein im wesentlichen vollständiges Recycling der verwendeten Materialien ermöglicht, gute akustische Eigenschaften auf weist und einfach herzustellen ist.

Die der Erfindung zugrundeliegende Aufgabe wird durch Bereitstellen eines leichtgewichtigen Radlaufteils mit den Merkmalen von Anspruch 1 gelöst.

Bevorzugte Ausführungsformen sind in den Unteransprüchen angegeben.

Der Kunststoff weist Additive mit einem Anteil von weniger als 20 Gew.%, bevorzugt weniger als 10 Gew.-% bezogen auf das Gesamtgewicht des Kunststoffs auf.

Additive können die Verarbeitbarkeit oder die Eigenschaften des Kunststoffs vorteilhaft beeinflussen.

Additive können beispielsweise Gleitmittel, Antiblockmittel, Trennmittel, Stabilisatoren, Antistatika, leitfähige Zusatzstoffe, Flammschutzmittel, Farbmittel, Flexibilisatoren, Weichmacher, Haftvermittler, Verstärkungsmittel, Treibmittel und Mischungen davon sein. Weiterhin können noch Synthese-Hilfsstoffe wie Katalysatoren, Emulgatoren, Fällmittel, Härter und/oder Beschleuniger in dem verwendeten Kunststoff enthalten sein.

Der Kunststoff, aus dem das Radlaufteil hergestellt ist, weist bevorzugt eine Dichte von weniger als 500 kg/m³ auf. Gemäss einer bevorzugten Weiterbildung der Erfindung liegt die Dichte des Kunststoffs in einem Bereich von 10 bis 300 kg/m³. Weiter bevorzugt liegt die Dichte des Kunststoffs in einem Bereich von 30 bis 100 kg/m^{3.}

Es hat sich völlig überraschend gezeigt, dass die Herstellung von leichtgewichtigen Radlaufteilen, die gute akustische als auch gute mechanische Eigenschaften, insbesondere eine völlig überraschende Steinschlagbeständigkeit, aufweisen, möglich ist.

Zur Herstellung des erfindungsgemäßen Radlaufteils werden bevorzugt thermoplastischer Kunststoff, duroplastischer Kunststoff und/oder Elastomer verwendet.

Bevorzugt werden als thermoplastische Kunststoffe Polyolefine und/oder Vinylpolymer verwendet. Als Polyolefine werden bevorzugt Polyethylen, Polypropylen, Polybuten oder Mischungen davon verwendet. Als besonders geeignet haben sich Polyethylen, Polypropylen und Mischungen davon erwiesen. Als Vinylpolymer wird bevorzugt Polystyrol verwendet.

Es können aber auch andere Kunststoffe wie beispielsweise thermoplastisches oder duroplastisches Polyurethan verwendet werden.

Selbstverständlich können Polyolefin und/oder Vinylpolymer auch als Copolymere, wie beispielsweise als Block- oder Pfropfcopolymere verwendet werden. Auch ist es möglich aus Polyethylen, Polypropylen und/oder Polybuten hergestellte Copolymere beispielsweise in der Form von Block- oder Pfropfcopolymeren bei der Herstellung der erfindungsgemäßen Radlaufteile zu verwenden.

Die vorgenannten bevorzugten thermoplastischen Kunststoffmaterialien sind in großen Mengen preisgünstig erhältlich und eignen sich aus diesem Grund besonders für die Herstellung von Massenartikel wie dem erfindungsgemäßen Radlaufteil.

Zur Herstellung eines Radlaufteils unter Verwendung von geschäumtem thermoplastischen Kunststoffmaterial können Kunststoffmaterialien verwendet werden, in die niedrigsiedende Substanzen, wie z.B. die Kohlenwasserstoffe Pentan bis Heptan, - Chlorkohlenwasserstoffe wie Methylenchlorid, Trichlorethylen, eingearbeitet sind. Es können aber auch andere Treibmittel wie z.B. Azo-Verbindungen, N-Nitrosoverbindungen oder Sulfonylhydrazide den Kunststoffmaterialien zugesetzt werden. Äußerst vorteilhaft können die Radlaufteile aus geschäumtem Kunststoff im Spritzguß, beispielsweise durch Thermoplast-Schaum-Gießen (TSG), hergestellt werden. Weiterhin kann auch das sogenannte MuCell^{®}-Verfahren unter Verwendung von überkritischem Kohlendioxid für das Spritzgießen verwendet werden. Das MuCell^{®}-Verfahren wurde von Trexel und Engel entwickelt (Firma Trexel, Woburn, MA, USA; Firma Engel, Schwertberg, Österreich).

Gemäß einer weiter bevorzugten Ausführungsform ist das leichtgewichtige Radlaufteil unter Verwendung von expandiertem thermoplastischen Kunststoff hergestellt. Insbesondere wird hierbei als thermoplastischer Kunststoff Polyethylen, Polypropylen. und/oder Polystyrol verwendet. Polypropylen hat sich für das erfindungsgemäße Radlaufteil als besonders verwendbar erwiesen.

Hierbei können die thermoplastischen Kunststoffmaterialien unter Zugabe von Treibmitteln, wie z.B. Kohlenwasserstoffen, beispielsweise durch Suspensions-(Perl-)Polymerisation mit einer Granulatgröße von beispielsweise 0,2 bis 0,3 mm, und unter Verwendung von Wasserdampf bei Temperaturen von 80°C bis 110°C vorgeschäumt werden, wobei Schaumperlen erhalten werden. Hierzu können diskontinuierlich oder kontinuierlich arbeitende Vorschäumer verwendet werden. Der in die Zellwände diffundierende Wasserdampf unterstützt dabei den Schäumvorgang. Die vorgeschäumten losen Schaumperlen können dann in die Werkzeughöhlung für das Radlaufteil, beispielsweise ein Werkzeug zur Schaumpartikelverarbeitung mit Dampfdüsen, Füllsystem, Crackspalt, etc., mit gasdurchlässigen Wandungen eingebracht werden, wobei die in der Perlschüttung verbliebene Luft unter Anlegen eines Vakuums entfernt werden kann.

Unter Energiezufuhr, beispielsweise in der Form von Wasserdampf, gegebenenfalls mit Hochfrequenzanregung, können die Schaumperlen dann bei 100° bis 160°C und 0,5 bis zu 5 bar erweicht werden. Hierbei wird der Dampfdruck des Resttreibmittels erhöht, so daß die Schaumperlen weiter expandieren und dabei verschweißen.

Das auf diese Weise hergestellte Radlaufteil ist überraschend formstabil und weist hervorragende akustische Eigenschaften, d.h. gute Schalldämpfungs- und/oder Schalldämmungseigenschaften, sowie hervorragende mechanische Eigenschaften, d.h. gute Formstabilität und gute Schlagzähigkeit, auf.

Bei dem Radlaufteil gemäß der Erfindung werden äußerst bevorzugt keine mineralischen Füllstoffe zugesetzt. Unter Verwendung von geschäumten oder expandierten Kunststoffen, wie Polyethylen, Polypropylen und/oder Polystyrol, und unter Weglassung von jeglichen, üblicherweise verwendeten mineralischen Füllstoffen wird ein äußerst leichtgewichtiges Radlaufteil bereitgestellt.

Der geschäumte oder expandierte thermoplastische Kunststoff kann eine offen-, geschlossen- oder gemischtzellige Struktur aufweisen. Bei einer offen- oder gemischtzelligen Struktur ist es bevorzugt, daß das Radlaufteil an der Oberfläche eine geschlossene Außenhaut aufweist, damit Feuchtigkeit und Wasser von dem Radlaufteil nicht aufgenommen wird.

Gemäß einer bevorzugten Ausführungsform weist der Kunststoff eine im wesentlichen geschlossenzellige, bevorzugt eine geschlossenzellige, Beschaffenheit auf. Die Schäum- bzw. Expansionsbedingungen können so eingestellt werden, daß die gewünschte geschlossenzellige Beschaffenheit erhalten werden kann.

Eine geschlossenzellige Beschaffenheit des Kunststoffs wird bevorzugt, da auch im Falle einer Verletzung der geschlossenen Außenhaut des Kunststoffs keine Feuchtigkeit und kein Wasser in das Radlaufteil eindringen kann. Bei Ausbildung des Kunststoffschaums als geschlossenzelliger Schaum können lediglich einzelne Zellen, beispielsweise durch hochgeschleuderte Partikel oder Gegenstände wie z.B. Steine, Äste, Glasscherben, etc. verletzt werden. Jedoch kann gegebenenfalls in die verletzte Zelle bzw. verletzten Zellen eingedrungene Feuchtigkeit nicht weiter in das Innere des Radlaufteils gelangen.

Die erfindungsgemäßen Radlaufteile können äußerst vorteilhaft ein Gewicht aufweisen, das vergleichbaren Radlaufteilen aus Vliesstoff entspricht. Auch ist es möglich, die erfindungsgemäßen Radlaufteile mit einem geringerem Gewicht, bezogen auf vergleichbare Radlaufteile aus Vliesstoff, herzustellen. Gegenüber den Radlaufteilen aus Vliesstoff weisen die erfindungsgemäßen Radlaufteile den Vorteil auf, daß letztere weder Feuchtigkeit bzw. Wasser noch Schmutzpartikel in größerem Umfang aufnehmen und einlagern. Darüber hinaus fällt bei der Herstellung der erfindungsgemäßen Radlaufteile kein Randverschnitt von Vliesstoffmaterialien an, was bei den großen Herstellungsmengen ein bedeutender ökonomischer Vorteil ist.

Weiterhin können die erfindungsgemäßen Radlaufteile durch Spritzguß hergestellt werden. Das Verfahren zur Herstellung der erfindungsgemäßen Radlaufteile ist, verglichen mit dem Verfahren zur Herstellung von Radlaufteilen aus Vliesstoff, bedeutend einfacher, da kein Vliesstoffmaterial zugeschnitten, in eine Form eingebracht und umspritzt werden muß.

Äußerst vorteilhaft können die erfindungsgemäßen Radlaufteile vollständig recycliert werden. Mithin können gebrauchte Radlaufteile, gegebenenfalls nach Reinigung des Kunststoffmaterials, granuliert werden. Das Granulat kann gegebenenfalls zumindest teilweise als Zumischung bei der Neuherstellung von Radlaufteilen wieder verwendet werden. Selbstverständlich kann das aus gebrauchten Radlaufteilen hergestellte Granulat auch zur Herstellung andere Produkte verwendet werden.

Das erfindungsgemäße Radlaufteil ist nicht auf bestimmte geometrische Abmessungen beschränkt. Mithin kann das erfindungsgemäße Radlaufteil jede konstruktive Ausgestaltung aufweisen, die für die Auskleidung eines Radhauses bzw. Radkastens erforderlich ist.

Selbstverständlich kann das erfindungsgemässe Radlaufteil auch formstabilisierende Elemente wie z. B. Verstrebungen in Form von z. B. Längs- und/oder Querrippen bzw. - nuten aufweisen. Diese Längs- und/oder Querrippen bzw. -nuten können beispielsweise auf der dem Rad abgewandten Fläche des Radlaufteils aufgesetzt bzw. an dem Radlaufteil integriert angeordnet sein.

Die Anordnung von solchen formstabilisierenden Elementen kann in einem separaten Arbeitsgang erfolgen. Bevorzugt weist die Werkzeugkavität eine entsprechende Formgebung auf, so dass die formstabilisierenden Elemente wie z. B. Längs- und/oder Querrippen oder -nuten an dem Radlaufteil integriert angeordnet sind.

Äusserst vorteilhaft gibt es bei dem erfindungsgemässen Radlaufteil keine konstruktiven Beschränkungen, da auch schwierige Formgebungen des Radlaufteils unter Verwendung sämtlicher bekannter direkt dreidimensional formgebenden Verfahren hergestellt werden können.

Das erfindungsgemässe Radlaufteil kann bei Verwendung von thermoplastischem Kunststoffmaterial äusserst vorteilhaft durch Warmformen, bevorzugt durch Tiefziehen, geformt sein. Bei dem bevorzugt verwendeten Tiefziehverfahren kann das Tiefziehen unter Verwendung eines Stempels und/oder unter Anlegung eines Unterdrucks erfolgen.

Beim Warmformen, bevorzugt Tiefziehen, wird bevorzugt geschäumte Bahnenware verwendet.

Selbstverständlich kann die dem Rad abgewandte Seite des Radlaufteils wenigstens teilweise kaschiert sein. Das Kaschieren mit einem textilen oder folienartigen Material kann während des Formgebungsverfahrens oder aber auch nachträglich in einem weiteren Arbeitsvorgang erfolgen.

Gemäss einer bevorzugten Ausführungsform der Erfindung wird expandiertes Polypropylen, im folgenden auch als EPP bezeichnet, verwendet. EPP erweist sich völlig überraschend in verschiedenen Materialdichten und -dicken als sehr beständig gegenüber abrasiven Materialien wie Schotter, Splitt, Sand, etc..

Hierzu wurden mehrstündige Steinschlag-Laborversuche gemäss der Mercedes Benz-Norm Lacktechnische Prüfvorschrift LPV 6100. 65004 durchgeführt, welche die überraschende Verwendbarkeit von aus EPP hergestellten Radlaufteilen zeigten. Nach Beendigung der Steinschlag-Laborversuche konnte lediglich eine leichte Aufrauhung der beaufschlagten EPP-Oberfläche festgestellt werden. Überraschenderweise zeigte das aus EPP-hergestellte Radlaufteil eine erhöhte Widerstandszeit, verglichen mit im Serieneinsatz befindlichen Radlaufteilen. Durch eine zusätzliche Verhautung der Oberfläche kann die Widerstandsfähigkeit gegenüber abrasiven Materialien weiter verbessert werden.

Bei akustischen Untersuchungen wurde gezeigt, dass Radlaufteile aus EPP die Übertragung von Steinschlag-, Spritzwasser- und Rollgeräuschen in den Fahrzeuginnenraum in vergleichbarer Weise wie gegenwärtig im Serieneinsatz befindliche Radlaufteile vermindern. In Abhängigkeit von dem Einbau des EPP Radlaufteils und der jeweiligen Anregungsart kommt es sogar zu einer teilweise deutlichen Geräuschpegelreduzierung. Insbesondere im Bereich mit direktem Blechkontakt, wie z. B. Anschraubpunkte, Engstellen, etc., sind EPP-Radlaufteile herkömmlichen Radlaufteilen überlegen.

Die akustischen sowie die allgemeinen mechanischen Eigenschaften können durch Wahl der verwendeten EPP-Variante, z. B. der Dichte und Härte, die Oberflächengestaltung und die geometrische Ausgestaltung des Radlaufteils, beispielsweise durch Noppen, Narben, Verstrebungen, Profile, etc., beeinflusst werden.

Besonders vorteilhaft ist das äusserst geringe Gewicht der EPP-Radlaufteile, verglichen mit den herkömmlicherweise verwendeten Radlaufteilen, wie nachfolgend gezeigt wird.

Nachfolgend sind die Gewichte von Radlaufteilen aufgeführt, die die gleichen Abmessungen aufweisen und bei Mittelklassewagen verwendet werden :
- Radlaufteil aus mineralgefülltem, Elastomer-modifiziertem Polypropylen: ca. 1700 g
- Radlaufteil aus ungefülltem, Elastomer-modifiziertem Polypropylen: ca. 1300 g
- Radlaufteil mit Textil ca. 700 g
- EPP-Radlaufteil (Dichte: 60 kg/m³, Wandstärke: 10 bis 15 mm) ca. 500 g

Wie aus der vorstehenden Auflistung ersichtlich ist, ermöglicht die Verwendung von EPP die Herstellung von Radlaufteilen mit einem äußerst geringen Gewicht, verglichen mit herkömmlichen Radlaufteilen. Im Hinblick auf das Gewicht von Radlaufteilen, die unter Verwendung von Textil hergestellt wurden, ist die Verringerung des Gewichts weniger stark ausgeprägt. Jedoch nehmen die textilen Radlaufteile während des Gebrauchs große Mengen an Schmutz und, bei Nässe, zusätzlich große Mengen an Wasser bzw. Feuchtigkeit in die textile Struktur auf. Die Schmutzaufnahme führt, wie eingangs dargelegt, nach ca. 80.000 km zu einer Verdopplung des Gewichts des Radlaufteils.

Die Wasseraufnahme durch ein EPP-Radlaufteil ist hingegen äußerst vorteilhaft sehr gering. Die Wasseraufnahme beträgt bei Lagerung in Wasser für sieben Tage gemäß DIN 53 428 ("Prüfung von Schaumstoffen. Bestimmung des Verhaltens gegen Flüssigkeiten , Dämpfe, Gase und feste Stoffe.") weniger als 2 Gew.-%. Darüber hinaus weist das EPP-Radlaufteil eine Verschmutzung während des Gebrauchs auf, die der eines Radlaufteils aus Elastomer-modifiziertem Polypropylen entspricht.

Äußerst vorteilhaft ist mithin die Gewichtszunahme aufgrund von Schmutz- und/oder Feuchtigkeitsaufnahme bei dem erfindungsgemäßen EPP-Radlaufteil sehr gering.

Schließlich ist das EPP-Radlaufteil in Übereinstimmung mit der EU-Altautoverordnung und im Unterschied zu herkömmlichen Radlaufteilen vollständig recyclierbar. Das erfindungsgemäße EPP-Radlaufteil stellt somit im Hinblick auf ökologische und ökonomische Aspekte einen bedeutenden Fortschritt dar.

Ein weiterer Vorteil ist, daß die EPP-Radlaufteile in großen Stückzahlen in einem Arbeitsgang einfach hergestellt werden können.

Neben Neopolen der Firma BASF, Ludwigshafen, Deutschland, kann auch EPP von anderen Herstellern verwendet werden wie z.B. der Firma FAGERDALA INDUSTRI AB, Gustavsberg, Schweden; der Firma Gefinex GmbH, Steinhagen, Deutschland; JSP International, Japan.

Experimentelle Untersuchungen

### I. Bewertung der akustischen Eigenschaften

Unter Verwendung von Neopolen (Firma BASF, Ludwigshafen, Deutschland) wurden auf dem Schäumautomaten Unimat 2/A der Firma Teubert, Blumberg, Deutschland, EPP-Musterteile hergestellt. Die Herstellungsbedingungen der EPP-Musterteile entsprachen den üblichen Bedingungen bei der Herstellung von EPP-Formkörpern: Dampfdruck: ca. 4 bar, Dampftemperatur: 140°C bis 150°C.

Für akustische Messungen wurden EPP-Platten mit für Radlaufteilen entsprechender Dicke und Dichte hergestellt. Die Dicke der EPP-Platten betrug 10 mm und die Dichte betrug 60 kg/m³.

Zu Vergleichszwecken wurden Platten aus mineralgefülltem thermoplastischem Material, nämlich BaryLiner, hergestellt. Die Dicke der BaryLiner-Platten betrug 3 mm und die Dichte betrug 1150 kg/m³. Die Herstellung des Plattenmaterials aus BaryLiner erfolgte wie in der DE 33 43 402 beschrieben. BaryLiner ist ein elastomermodifiziertes' Polypropylen der Firma Stankiewicz, Celle, Deutschland.

Zur Bewertung der akustischen Wirkung von Radlaufteilen im Kraftfahrzeug wird die Einwirkung von Steinschlag wie z.B. Rollsplitt sowie Spritzwasser nachgestellt. Dabei wird der Aufbau Radlaufteil mit dahinterliegendem Blech ohne Radlaufteil verglichen.

Die Fähigkeit zur Luftschallpegelverminderung bei Körperschallanregung wurde unter Verwendung der Barytest-Apparatur bestimmt. Die Barytest-Apparatur ist eine Vorrichtung zur Bestimmung der Schallabstrahlung einer durch kleine Metallstößel zu Körperschall angeregten Platte. Dabei wird der resultierende Luftschallpegel auf der der angeregten Seite gegenüberliegenden Seite der Platte unter Verwendung eines Mikrophons gemessen.

Bei der verwendeten Meßapparatur schlagen auf die Unterseite eines horizontal eingespannten Karosseriebleches eine Anordnung von Metallstößeln in zufälliger Reihenfolge. Wie beim Fahren über Rollsplitt stellt dies eine Körperschallanregung des Radhauses bestehend aus vielen Einzelimpulsen dar. Auf der gegenüberliegenden Seite des Bleches wird zur Bestimmung der resultierenden Luftschallabstrahlung der Luftschalldruckpegel gemessen und dient als Referenz für die Anordnungen mit in Form einer Platte vorgesetztem Radlaufteil-Material (Radhausschalenmaterial). Die Anordnung der Metallstößel und das Aufnahmemikrophon sind jeweils mit einer Blechauskleidung in Kastenform umgeben, wobei die Kastenformen jeweils in Richtung des zwischen den Kastenformen horizontal angeordneten, zu untersuchenden Plattenmaterials offen sind. Zur Bestimmung der akustischen Verbesserung wird der resultierende Schalldruckpegel der Anordnung mit vorgesetztem Radlaufteil-Material vom Referenzpegel subtrahiert.

### 1. Anordnung:

Das zu bewertende Radlaufteil-Material wurde direkt unter dem Stahlblech in Form einer Platte unter Verwendung eines umseitigen Klemmrahmens angeordnet. Die Körperschallanregung durch die Metallstößel erfolgte von unten auf das Radlaufteil-Material. Der Schalldruckpegel der resultierenden Abstrahlung des blanken Blechs wurde von oben mittels eines Mikrophons gemessen.

### 2. Anordnung

Das Radlaufteil-Material wurde mit einem Rahmen auf Luftabstand vor das Stahlblech gesetzt, so daß die Gesamtaufbauhöhe Radhausschale - Stahlblech 20 mm betrug. Der Schalldruckpegel der resultierenden Abstrahlung des blanken Blechs wurde wie bei der 1. Anordnung von oben gemessen.

### Ergebnis

Die Pegeldifferenzen der Schalldruck-Summenpegel (400 - 8000 Hz) sind in Tabelle 1 angegeben.

**Tabelle1: Vergleich der Schalldruck-Summenpegel von aus BaryLiner und EPP hergestellten Platten**

| | BaryLiner | EPP |
|---|---|---|
| Radlaufteil mit direktem Blechkontakt (1. Anordnung) | 5,8 dB | 17,4 dB |
| Radlaufteil mit Luftabstand zum Blech (2. Anordnung) | 14,6 dB | 16,9 dB |

Wie aus Tabelle 1 hervorgeht, weist ein Radlaufteil aus EPP eine einem herkömmlichen, aus BaryLiner hergestellten Radlaufteil vergleichbare, teilweise sogar verbesserte Luftschallpegelverminderung auf. EPP ist mithin ein geeignetes Material zur Verminderung von Körperschall durch Steinschläge oder Spritzwasser.

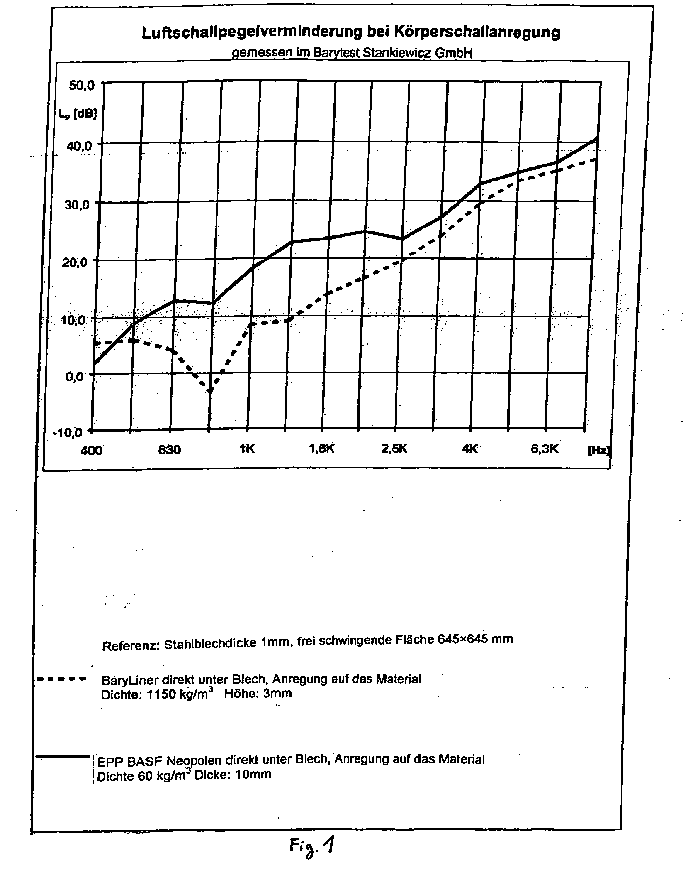

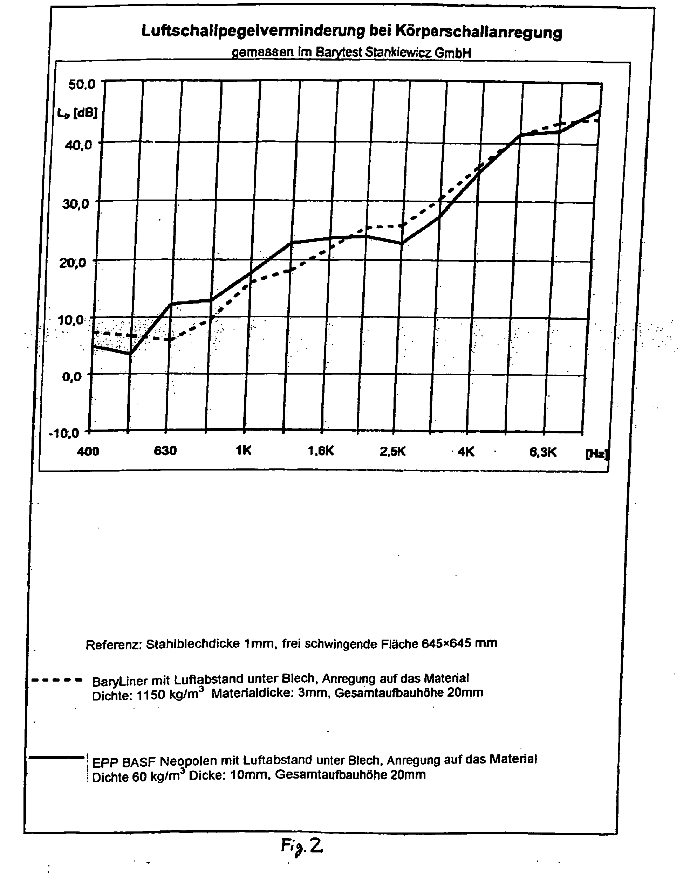

Zur weiteren Veranschaulichung der vorstehend aufgeführten Ergebnisse sind die jeweiligen Meßkurven als Fig. 1 und Fig. 2 beigefügt.

Fig. 1 zeigt den gemessenen Differenzschalldruckpegel Lp zwischen dem blanken Blech als Referenz und der Anordnung aus Blech und Dämpfungsplatte bei der 1. Anordnung.

Kurve 1 (durchgehende Linie) zeigt den Differenzschalldruckpegel eines 1 mm starken Stahlblechs mit einer frei schwingenden Fläche von 645 x 645 mm, auf dem eine EPP-Platte (EPP BASF Neopolen) mit einer Dichte von 60 kg/m³ und einer Dicke von 10 mm angeordnet ist.

Kurve 2 (gestrichelte Linie) zeigt den Differenzschalldruckpegel eines 1 mm starken Stahlblechs mit einer frei schwingenden Fläche von 645 x 645 mm, auf dem eine BaryLiner-Platte mit einer Dichte von 1150 kg/m³ und einer Dicke von 3 mm angeordnet ist.

Fig. 2 zeigt den gemessenen Differenzschalldruckpegel Lp zwischen dem blanken Blech als Referenz und der Anordnung aus Blech und Dämpfungsplatte bei der 2. Anordnung.

Kurve 1 (durchgehende Linie) zeigt den Differenzschalldruckpegel eines 1 mm starken Stahlblechs mit einer frei schwingenden Fläche von 645 x 645 mm, über der unter Ausbildung eines Luftabstands eine EPP-Platte (EPP BASF Neopolen) mit einer Dichte von 60 kg/m³ und einer Dicke von 10 mm angeordnet ist, wobei die Gesamthöhe der Anordnung 20 mm beträgt.

Kurve 2 (gestrichelte Linie) zeigt den Differenzschalldruckpegel eines 1 mm starken Stahlblechs mit einer frei schwingenden Fläche von 645 x 645 mm, über der unter Ausbildung eines Luftabstands eine BaryLiner-Platte mit einer Dichte von 1150 kg/m³ und einer Dicke von 3 mm angeordnet ist, wobei die Gesamthöhe der Anordnung 20 mm beträgt.

### II. Wasseraufnahmevermögen

Zur Untersuchung des Aufnahmefähigkeit von Wasser wurde ein geschäumtes EPP-Formteil mit geschlossener Oberfläche und mit einer Dichte von ca. 60 kg/m³ gemäß DIN 53 428 in Wasser angeordnet. Nach einem Tag hatte das EPP-Formteil 0,9 Gew.-% Wasser und nach sieben Tagen 1,7 Gew.-% Wasser aufgenommen. Die Angabe Gew.-% bezieht sich jeweils auf das Gesamtgewicht des Formteils.

Das erfindungsgemäße Radlaufteil besitzt mithin äußerst vorteilhaft ein sehr geringes Wasseraufnahmevermögen.

### III. Mechanische Eigenschaften

Zur Untersuchung der mechanischen Eigenschaften wurden EPP-Platten direkt auf ein Blech geklebt und gemäß der Lacktechnischen Prüfvorschrift von Mercedes-Benz LPV 6100.65004 von 1991 Dauersteinschlagprüfungen durchgeführt. Bei diesen Dauersteinschlagprüfungen wird die auf ein Blech geklebte Materialprobe mit Splitt beschossen.

Bei diesen Untersuchungen waren bei Vliesmaterial von im Serieneinsatz befindlichen Vliesradlaufteilen nach 60 Minuten bereits Löcher zu erkennen.

Für die Vergleichsuntersuchung wurde folgendes Vliesmaterial verwendet: PET-Vlies (PET: Polyethylenterephthalat) mit SBR-Binder (SBR: Styrol-Butadien-Elastomer), Dichte ca. 1.100 g/m², und Polyester Nadelvlies mit einer extrudierten Polypropylen-Rückenbeschichtung, Dichte ca. 1.100 g/m² mm.

EPP-Muster verschiedener Dicke, nämlich mit einer Dicke von ca. 5, 6-7, 10 u. 20 mm, und Dichte, nämlich mit einer Dichte von 29, 47 u. 80 kg/m³, wiesen auch nach 60 Minuten Splittbeschuß keine Löcher auf. Es kam lediglich zu einer leichten Aufrauhung der Oberfläche. Selbst nach sieben Stunden Splittbeschuß wiesen die EPP-Muster keine Löcher auf, zeigten aber deutliche Schädigungen.

## Patentansprüche

1. Leichtgewichtiges Radlaufteil aus Kunststoff zum Mindern der Übertragung von Roll-, Spritzwasser- und Steinschlaggeräuschen in den Fahrzeuginnenraum sowie zum Schutz vor Korrosion, das im Gebrauch im Radkasten eines Fahrzeuges dem Rad des Fahrzeuges gegenüberliegend zur Aufnahme von während der Fahrt des Fahrzeuges hochgeschleuderten Partikeln angeordnet ist,
**dadurch gekennzeichnet,**
**dass** der Kunststoff geschäumter oder expandierter Kunststoff ist, der den hoch geschleuderten Partikeln unmittelbar ausgesetzt ist.

2. Leichtgewichtiges Radlaufteil gemäß Anspruch 1,
**dadurch gekennzeichnet,**
**dass** der Kunststoff Additiv(e) mit einem Anteil von weniger als 20 Gew.-%, bevorzugt von weniger als 10 Gew.%, bezogen auf das Gesamtgewicht des Kunststoffs, enthält.

3. Leichtgewichtiges Radlaufteil gemäß Anspruch 1 oder 2,
**dadurch gekennzeichnet,**
**dass** der Kunststoff eine Dichte von weniger als 500 kg/m³ aufweist.

4. Leichtgewichtiges Radlaufteil gemäß einem der vorhergehenden Ansprüche,
**dadurch gekennzeichnet,**
**dass** der Kunststoff eine Dichte zwischen 10 kg/m³ und 300 kg/m³, bevorzugt zwischen 30 kg/m³ und 100 kg/m³, aufweist.

5. Leichtgewichtiges Radlaufteil gemäß einem der vorhergehenden Ansprüche,
**dadurch gekennzeichnet,**
**dass** der Kunststoff an den Außenflächen des Radlaufteils eine geschlossene Außenhaut aufweist.

6. Leichtgewichtiges Radlaufteil gemäß einem der vorhergehenden Ansprüche,
**dadurch gekennzeichnet,**
**dass** der Kunststoff eine im wesentlichen geschlossenzellige Beschaffenheit aufweist.

7. Leichtgewichtiges Radlaufteil gemäß einem der vorhergehenden Ansprüche,
**dadurch gekennzeichnet,**
**dass** der Kunststoff keine mineralischen Füllstoffe enthält.

8. Leichtgewichtiges Radlaufteil gemäß einem der vorhergehenden Ansprüche,
**dadurch gekennzeichnet,**
**dass** der Kunststoff aus der Gruppe ausgewählt wird, die aus thermoplastischem Kunststoff, duroplastischem Kunststoff, Elastomer und Mischungen davon besteht.

9. Leichtgewichtiges Radlaufteil gemäß Anspruch 8,
**dadurch gekennzeichnet,**
**dass** der thermoplastische Kunststoff Polyolefin, Vinylpolymer oder Mischungen davon ist.

10. Leichtgewichtiges Radlaufteil gemäß Anspruch 9,
**dadurch gekennzeichnet,**
**dass** das Polyolefin aus der Gruppe ausgewählt wird, die aus Polyethylen, Polypropylen, Polybuten und Mischungen davon besteht.

11. Leichtgewichtiges Radlaufteil gemäß Anspruch 9,
**dadurch gekennzeichnet,**
**dass** das Vinylpolymer Polystyrol ist.

12. Leichtgewichtiges Radlaufteil gemäß einem der vorhergehenden Ansprüche,
**dadurch gekennzeichnet,**
**dass** das Radlaufteil warmverformt, bevorzugt tiefgezogen, ist.

13. Verwendung von geschäumtem oder expandiertem thermoplastischen Kunststoff, duroplastischen Kunststoff, Elastomer oder Mischungen davon zur Herstellung von leichtgewichtigen Radlaufteilen gemäß einem der vorangehenden Ansprüche.

14. Verwendung gemäß Anspruch 13, wobei der thermoplastische Kunststoff Polyolefin, bevorzugt Polyethylen, Polypropylen und/oder Polybuten, und/oder Vinylpolymer, bevorzugt Polystyrol, ist.

## Claims

1. Lightweight wheel arch part made of plastics for reducing the transfer of roll, splash and stone noises to the vehicle interior, as well as for corrosion protection, which in use is arranged in the wheel housing of a vehicle opposite to the vehicle wheel for receiving particles hurled up during vehicle travel,
**characterized in that** the plastics is foamed or expanded plastics that is directly subjected to the hurled-up particles.

2. Lightweight wheel arch part according to claim 1,
**characterized in that** said plastics contains additive(s) at a ratio of less than 20 % by weight, preferably less than 10 % by weight relative to the overall weight of the plastics.

3. Lightweight wheel arch part according to claim 1 or 2,
**characterized in that** said plastics has a density of less than 500 kg/m³.

4. Lightweight wheel arch part according to one of the preceding claims, **characterized in that** said plastics has a density between 10 kg/m³ and 300 kg/m³, preferably between 30 kg/m³ and 100 kg/m³.

5. Lightweight wheel arch part according to one of the preceding claims, **characterized in that** said plastics has a closed outer skin on the outer surfaces of the wheel arch part.

6. Lightweight wheel arch part according to one of the preceding claims, **characterized in that** said plastics is of a substantially closed-cell nature.

7. Lightweight wheel arch part according to one of the preceding claims, **characterized in that** said plastics does not contain mineral fillers.

8. Lightweight wheel arch part according to one of the preceding claims, **characterized in that** said plastics is selected from the group consisting of thermoplastic plastics, thermosetting plastics, elastomer, and mixtures thereof.

9. Lightweight wheel arch part according to claim 8,
**characterized in that** said thermoplastic plastics is polyolefin, vinyl polymer, or mixtures thereof.

10. Lightweight wheel arch part according to claim 9,
**characterized in that** said polyolefin is selected from the group consisting of polyethylene, polypropylene, polybutene, and mixtures thereof.

11. Lightweight wheel arch part according to claim 9,
**characterized in that** said vinyl polymer is polystyrene.

12. Lightweight wheel arch part according to one of the preceding claims, **characterized in that** said wheel arch is hot-formed, preferably deep-drawn.

13. Use of a foamed or expanded thermoplastic plastics, thermosetting plastics, elastomer, or mixtures thereof for manufacturing lightweight wheel arch parts according to one of the preceding claims.

14. Use according to claim 13, wherein the thermoplastic plastics is polyolefin, preferably polyethylene, polypropylene and/or polybutene, and/or vinyl polymer, preferably polystyrene.

## Revendications

1. Elément de passage de roue léger en matière plastique destiné à réduire la transmission de bruits de roulement, de projection d'eau et d'impacts de gravillons vers l'habitacle du véhicule, et à protéger de la corrosion, qui en état d'utilisation est disposé dans le passage de roue d'un véhicule vis-à-vis de la roue dudit véhicule pour la réception des particules projetées à vitesse élevée pendant la marche du véhicule,
**caractérisé**
**en ce que** la matière plastique est une matière plastique alvéolaire ou expansée, qui est directement exposée aux particules projetées à vitesse élevée.

2. Elément de passage de roue léger selon la revendication 1,
**caractérisé**
**en ce que** la matière plastique contient un ou des additifs en teneur inférieure à 20 % en poids, de préférence inférieure à 10 % en poids par rapport au poids total de la matière plastique.

3. Elément de passage de roue léger selon la revendication 1 ou la revendication 2,
**caractérisé**
**en ce que** la matière plastique a une densité inférieure à 500 kg/m³.

4. Elément de passage de roue léger selon l'une des revendications précédentes,
**caractérisé**
**en ce que** la matière plastique a une densité comprise entre 10 kg/m³ et 300 kg/m³, de préférence entre 30 kg/m³ et 100 kg/m³.

5. Elément de passage de roue léger selon l'une des revendications précédentes,
**caractérisé**
**en ce que** la matière plastique est pourvue d'une peau étanche sur les surfaces extérieures de l'élément de passage de roue.

6. Elément de passage de roue léger selon l'une des revendications précédentes,
**caractérisé**
**en ce que** la matière plastique présente essentiellement une consistance à cellules fermées.

7. Elément de passage de roue léger selon l'une des revendications précédentes,
**caractérisé**
**en ce que** la matière plastique ne contient pas d'agents de charge minéraux.

8. Elément de passage de roue léger selon l'une des revendications précédentes,
**caractérisé**
**en ce que** la matière plastique est sélectionnée dans le groupe constitué de matière plastique thermoplastique, de matière plastique duroplastique, d'élastomère et de mélanges de ceux-ci.

9. Elément de passage de roue léger selon la revendication 8,
**caractérisé**
**en ce que** la matière plastique thermoplastique est de la polyoléfine, du polymère vinylique ou des mélanges de ceux-ci.

10. Elément de passage de roue léger selon la revendication 9,
**caractérisé**
**en ce que** la polyoléfine est sélectionnée dans le groupe constitué de polyéthylène, polypropylène, polybutène et de mélanges de ceux-ci.

11. Elément de passage de roue léger selon la revendication 9,
**caractérisé**
**en ce que** le polymère vinylique est du polystyrène.

12. Elément de passage de roue léger selon l'une des revendications précédentes,
**caractérisé**
**en ce que** l'élément de passage de roue est façonné par déformation à chaud, de préférence par emboutissage.

13. Utilisation de matière plastique thermoplastique alvéolaire ou expansée, de matière plastique duroplastique, d'un élastomère ou de mélange de ceux-ci pour fabriquer des éléments de passage de roue légers selon l'une des revendications précédentes.

14. Utilisation selon la revendication 13, où la matière plastique thermoplastique est de la polyoléfine, de préférence du polyéthylène, du polypropylène et/ou du polybutène, et/ou du polymère vinylique, de préférence du polystyrène.
